(19) Europäisches Patentamt
European Patent Office
Office européen des brevets

(11) Veröffentlichungsnummer: **0 429 827 A2**

# (12) EUROPÄISCHE PATENTANMELDUNG

(21) Anmeldenummer: **90119822.6**

(51) Int. Cl.5: **C08G 69/16**

(22) Anmeldetag: **16.10.90**

(30) Priorität: **28.10.89 DE 3936022**

(43) Veröffentlichungstag der Anmeldung:
**05.06.91 Patentblatt 91/23**

(84) Benannte Vertragsstaaten:
**DE FR GB IT NL Patentblatt**

(71) Anmelder: **BAYER AG**

**W-5090 Leverkusen 1 Bayerwerk(DE)**

(72) Erfinder: **Heinz, Hans-Detlef, Dr.**
**Breslauerstrasse 31**
**W-4150 Krefeld(DE)**
Erfinder: **Fahnler, Friedrich**
**Wimmersweg 60**
**W-4150 Krefeld(DE)**
Erfinder: **Dujardin, Ralf, Dr.**
**Bodelschwinghstrasse 18**
**W-4150 Krefeld(DE)**
Erfinder: **Meyer, Rolf-Volker, Dr.**
**Buchheimerstrasse 23**
**W-4150 Krefeld(DE)**
Erfinder: **Dhein, Rolf, Dr.**
**Deswatinesstrasse 30**
**W-4150 Krefeld(DE)**

## (54) Lactamschmelzen mit erhöhter Viskosität und ihre Verwendung.

(57) Die Erfindung betrifft Lactamschmelzen mit erhöhter Viskosität, ihre Herstellung sowie ihre Verwendung, bevorzugt im Bereich der aktivierten anionischen Lactampolymerisation (Gußpolyamid). Den Lactamschmelzen werden erfindungsgemäß bestimmte wasser- und/oder alkohollösliche Polymere mit Amid- und/oder Amin- und/oder Ethergruppen, welche kein acides H-Atom an diesen funktionellen Gruppen mehr enthalten und welche sich in der Lactamschmelze auflösen, in Mengen von 2-20 Gew.-% zugesetzt. Bevorzugtes Lactam ist ε-Caprolactam. Lactamschmelzen erhöhter Viskosität eignen sich z.B. für die Aufnahme von Verstärkungs- und Füllstoffen.

EP 0 429 827 A2

## LACTAMSCHMELZEN MIT ERHÖHTER VISKOSITÄT UND IHRE VERWENDUNG

Die Erfindung betrifft Lactamschmelzen mit erhöhter Viskosität, ihre Herstellung sowie ihre Verwendung, bevorzugt im Bereich der aktivierten anionischen Lactampolymerisation (Gußpolyamid). Den Lactamschmelzen werden erfindungsgemäß bestimmte wasser- und/oder alkohollösliche Polymere mit Amid- und/oder Amin- und/oder Ethergruppen, welche kein acides H-Atom an diesen funktionellen Gruppen mehr enthalten und welche sich in der Lactamschmelze auflösen, in Mengen von 2-20 Gew.-% zugesetzt. Bevorzugtes Lactam ist $\epsilon$-Caprolactam. Lactamschmelzen erhöhter Viskosität eignen sich z.B. für die Aufnahme von Verstärkungs- und Füllstoffen.

Gußpolyamidteile, z.B. aus $\epsilon$-Caprolactam hergestellt, weisen bekanntlich ein hohes Niveau der mechanischen Eigenschaften auf; aufgrund ihrer gegenüber Standardspritzgußteilen erhöhten Kristallinität sowie der wesentlich höheren Molekulargewichte sind fast alle mechanischen Eigenschaftswerte gegenüber durch Polykondensation hergestellten Polyamiden verbessert. Aus diesem Grund Ist Gußpolyamid ein attraktiver Werkstoff.

Ein Nachteil gegenüber den durch Polykondensation hergestellten Polyamiden liegt aber darin, das es sich im allgemeinen nicht thermoplastisch verarbeiten läßt. Alle Zusatzstoffe, die im Formteil anwesend sein sollen, müssen daher im allgemeinen in die Lactamschmelze vor der Polymerisation eingebracht werden.

Die Herstellung von Gußpolyamidteilen, ausgehend von niedrigviskosen Lactamschmelzen und Katalysatoren sowie Aktivatoren (aktivierte anionische Polymerisation) ist bekannt (z.B. Vieweg, Müller; Kunststoff-Handbuch Bd. VI, Carl Hanser Verlag, München 1966). Gegenüber Polyurethan-RIM-Systemen ist die Verfahrenstechnik einfacher, da z.B. aufgrund der sehr niedrigviskosen Lactamschmelzen drucklos und unter Einsatz einfacher Pumpen gefördert werden kann.

Für viele Einsatzgebiete wäre es nun wünschenswert; die guten mechanischen Eigenschaften von Gußpolyamidteilen weiter zu steigern, z.B. Härte, Steifigkeit und Festigkeit, vor allem auch den Kriechmodul, indem Verstärkungs- bzw. Füllstoffe zugesetzt werden, wie es von Spritzgußmaterialien her bekannt ist. Genau hier wirkt sich aber die geringe Viskosität der Lactamschmelzen sehr nachteilhaft aus, da aufgrund des Dichteunterschiedes z.B. Glasfasern sehr schnell sedimentieren. Dies macht die Herstellung eines glasfaserverstärkten Gußpolyamids auf konventionellem Wege sehr schwierig.

Es gibt vor allem zwei Methoden, die Viskosität von Flüssigkeiten zu erhöhen, nämlich einmal durch Thixotropierung und einmal durch Zugabe sich in dem Medium lösender und die Viskosität erhöhender Mittel.

Im Falle der apparativen Gegebenheiten bei der Herstellung von Gußpolyamidteilen kann vermutet werden, daß eine Thixotropierung der Schmelze ungünstig ist, da eine Rührbarkeit und damit Dispergierbarkeit der Füllstoffe nur im unmittelbaren Bereich des Rührers gegeben ist. Von daher erscheint eine homogene Verteilung der Verstärkungsstoffe kaum möglich. Weiterhin erscheint es in den üblicherweise verwendeten Apparaturen kaum möglich, die Thixotropiermittelpartikel fein genug zu verteilen, da hierzu im allgemeinen hohe Schergeschwindigkeiten benötigt werden.

Eigene Versuche bestätigten Nachteile bei Verwendung von Thixotropiermitteln.

Daher ist die zweite Möglichkeit, die Viskosität der Lactamschmelzen durch Einbringen eines gut löslichen, die Viskosität steigernden Additivs zu erhöhen, bei weitem vorzuziehen.

Problematisch ist hier allerdings, das die aktivierte anionische Polymerisation von Lactamen ein chemisch sehr empfindliches System darstellt, das durch die allermeisten Zusatzstoffe gestört wird. Übliche Verdickungsmittel wie beispielsweise Polyvinylalkohol oder Poly acrylsäure stören im allgemeinen entweder die Polymerisation oder sind in den Lactamschmelzen zu wenig löslich.

Überraschend wurde nun gefunden, das die Viskosität von Lactamschmelzen durch Zusatz spezieller, wasser-und/oder alkohollöslicher Polymerer mit Amid- und/oder Amin-und/oder Ethergruppen, welche kein acides H-Atom an den funktionellen Gruppen tragen, drastisch erhöht werden kann, wobei sie eine sehr gute Löslichkeit wie auch Lösegeschwindigkeit in den Lactamen besitzen, und daß durch diese Maßnahme die aktivierte anionische Polymerisation im allgemeinen nicht oder nur wenig gestört wird. Weiterhin wurde gefunden, daß diese Lactamschmelzen sich sehr gut zur Herstellung verstärkter und gefüllter Gußpolyamidteile eignen, da die Füllstoffe/Verstärkungsstoffe entweder gar nicht oder nur so langsam sedimentieren, das eine gute homogene Verteilung resultiert.

Gegenstand der Erfindung sind daher Lactamschmelzen auf Basis von Lactamen mit mindestens 4 C-Atomen im Ring mit erhöhter Viskosität, dadurch gekennzeichnet, daß sie 2-20 Gew.-% (bezogen auf die verdickte Lactamschmelze), bevorzugt 3-18 Gew.-% und besonders bevorzugt 4-15 Gew.-% an wasser- und/oder alkohollöslichen Polymeren mit Amid- und/oder Amin- und/oder Ethergruppen, wobei die funktionellen Gruppen keine aciden H-Atome mehr tragen sollen, enthalten, bevorzugt Poly(2-alkyloxazoline), Poly-N-vinyllactame, Polyvinylpyridine und Poly-N-alkyl-N-vinylamide, wobei die Viskositäten der resultierenden Lactamschmelzen zwischen 20 und 2000 mPa.s bei 135 °C liegen sollen.

Gegenstand der Erfindung ist auch die Verwendung der erfindungsgemäßen Lactamschmelzen zur Herstellung von Polyamiden, bevorzugt durch aktivierte anionische Polymerisation, insbesondere zur Herstellung verstärkter und/oder gefüllter Gußpolyamidteile. Gegenstand der Erfindung sind auch ein Verfahren zur Herstellung dieser (Guß)polyamid(teil)e sowie die durch Verwendung der erfindungsgemäßen Lactamschmelzen hergestellten (Guß)polyamid(teil)e.

Die erfindungsgemäß als Verdicker einzusetzenden Polymeren sind prinzipiell bekannt, oder können nach prinzipiell bekannten Verfahren hergestellt werden.

Bevorzugt sind als Verdicker:

1. Polyalkyloxazolin-Homo- und -Copolymere auf Basis des Bausteins (I),

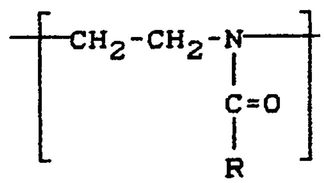

(I)

wobei
R einen (ar)aliphatischen Rest mit 1-30, bevorzugt 1-5, C-Atomen oder einen (Alk)arylrest mit 6-20 C-Atomen,
bedeuten, wobei die Homopolymeren des Bausteins (I) besonders bevorzugt sind,

2. Poly-N-vinyllactam-Homo- und -Copolymere auf Basis des Bausteins (II)

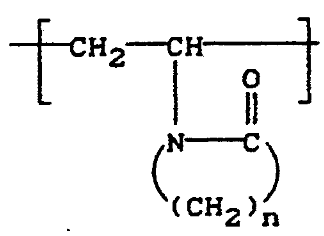

(II)

wobei
n eine ganze Zahl von 2-15, bevorzugt 3-6 und 10-12, ist, und wobei die Homopolymeren besonders bevorzugt sind,

3. Polyvinylpyridin-Homo- und -Copolymere auf Basis des Bausteins (III)

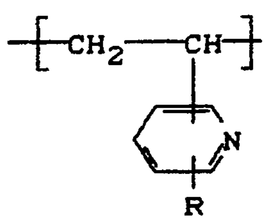

(III)

wobei R einen $C_{1-8}$-Kohlenstoffrest oder (besonders bevorzugt) Wasserstoff bedeuten, und die Homopolymeren des Bausteins (III) besonders bevorzugt sind,
und

4. Poly-N-vinyl-N-alkylamid-Homo- und -Copolymere auf Basis des Bausteins (IV)

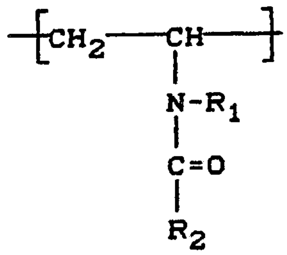

(IV)

wobei

$R_1$, $R_2$ unabhängig voneinander einen $C_{1-10}$-Kohlenstoffrest bedeuten, bevorzugt einen $C_{1-5}$-Rest, und wobei wiederum die Homopolymeren besonders bevorzugt sind.

Spezifische Beispiele für Polymere auf Basis der Bausteine (I) bis (IV) sind:

Poly-(2-ethyloxazolin)e

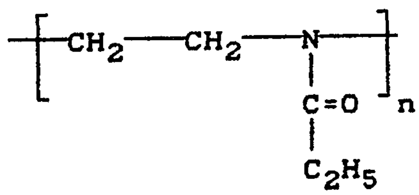

(V)

Poly-N-vinylpyrrolidon

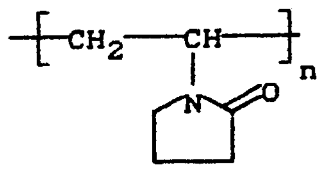

(VI)

Poly-N-vinylcaprolactam

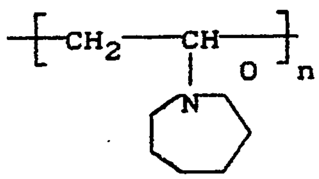

(VII)

Poly-2-vinylpyridin

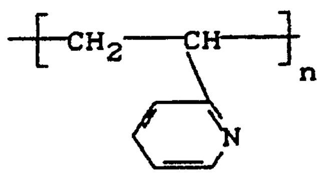

(VIII)

Poly-4-vinylpyridin

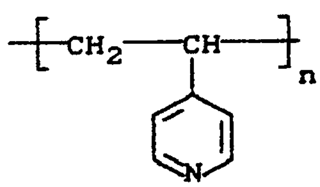

(IX)

Poly-N-vinyl-N-methylacetamid

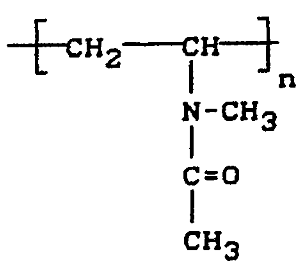

(X)

Diese Polymeren (V) bis (X) zählen zu den besonders bevorzugt erfindungsgemäß einzusetzenden Polymeren. Insbesondere ist Polyvinylpyrrolidon(VI) bevorzugt. Als Literaturhinweis sei auf Encyclopedia of Polymer Science & Engineering, Interscience Publishers, John Wiley & Sons, New York 1971, und Houben-Weyl, Methoden der organischen Chemie, Ergänzungsband E 20, Georg Thieme-Verlag, Stuttgart 1987, verwiesen.

Die Verdickerpolymeren werden bevorzugt den zu polymerisierenden Lactamschmelzen in einer solchen Menge zugesetzt, daß die Viskosität (ohne Füll- und/oder Verstärkungsstoffe) mindestens ca. 50 mPa.s bei ungefähr 135 °C (gemessen mit einem Brookfield-Viskosimeter), besonders bevorzugt mindestens 100 mPa.s und insbesondere mindestens 150 mPas, beträgt. Diese Viskosität ist im allgemeinen ausreichend, um, je nach Menge, eine ausreichend stabile Dispersion der Füll- und Verstärkungsstoffe, z.B. Glasfasern, zu erreichen. Andererseits sollte die Viskosität der Lactamschmelze (ohne Füll-/Verstärkungsstoffe) bevorzugt nicht höher als ungefähr 1.500 mPa.s, besonders bevorzugt 1000 mPa.s, liegen, da ansonsten die Verarbeitbarkeit erschwert sein kann. Je nach Molekulargewicht und Typ der Verdickerpolymeren werden dazu besonders bevorzugt 4-15 Gew.-% (bezogen auf die verdickte Lactamschmelze) der Verdicker eingesetzt. Die Verdicker werden einzeln oder in einem beliebigen Gemisch eingesetzt.

Die Verdicker sind in der Lactamschmelze in gelöster Form enthalten. Darunter wird im Rahmen der Erfindung verstanden, daß eine für das Auge klare Schmelze vorliegt. Ebentuell vorhandene unlösliche Anteile sollten nicht mehr als maximal 5 % betragen.

Die Molmassen ($\overline{M}w$) der Verdickerpolymere können variieren; sie sollten i.a. aber mindestens 10 000 $gmol^{-1}$, bevorzugt mindestens 50 000 $gmol^{-1}$ und besonders bevorzugt mindestens 100 000 $gmol^{-1}$ betragen. Polyvinylpyrrolidon(VI) sollte besonders bevorzugt ein Molekulargewicht $\overline{M}n$ von mindestens 300.000 g $mol^{-1}$ besitzen.

Als Lactame zur Herstellung des Guß-Polyamids sind Lactame mit mindestens 4 C-Atomen im Ring geeignet. Bevorzugte Lactame sind $\epsilon$-Caprolactam und $\omega$-Laurinlactam. Besonders bevorzugt wird Caprolactam verwendet. Die Lactame können auch in einem beliebigen Gemisch eingesetzt werden.

Es können prinzipiell alle bekannten Katalysatoren eingesetzt werden, z.B. die Natriumsalze des Caprolactams und des Pyrrolidons, Natriumhydrid, Natriummethanolat, Caprolactammagnesiumbromid und -iodid.

Es können prinzipiell alle bekannten Aktivatoren eingesetzt werden, z.B. Isocyanate, Säurechloride, Säureanhydride, Carbodiimide, Umsetzungsprodukte aus diesen Verbindungen mit Lactamen usw.

Bevorzugte Katalysatoren sind die Natriumsalze des Caprolactams und des Pyrrolidons sowie Caprolactammagnesiumbromid und -iodid.

Bevorzugte Aktivatoren sind Isocyanate und Säurechloride bzw. die jeweiligen Umsetzungsprodukte mit Lactamen.

Zur Herstellung der erfindungsgemäßen Lactamschmelzen können beispielsweise die Lactame mit den reinen Polymeren gemischt und aufgeschmolzen oder auch die reinen Polymeren bzw. Lösungen derselben in flüchtigen Lösungsmitteln, z.B. Methanol oder Wasser, mit geschmolzenen Lactamen gemischt werden (unter gegebenenfalls anschließendem Abziehen des Lösungsmittels).

Gegebenenfalls kann es nötig sein, die Verdickerpolymeren vor dem Einsatz zu trocknen.

Es können neben den erfindungsgemäß einzusetzenden Verdickerpolymeren (und den gegebenenfalls anwesenden Füll-bzw. Verstärkungsstoffen) auch (gegebenenfalls funktionalisierte) Kautschuke bzw. Weichsegmente in der Schmelze enthalten sein, z.B. Polyether, Polydiene u.a., wie sie im Stand der Technik für Polyamide beschrieben sind. Dabei sind funktionalisierte Weichsegmente bevorzugt, die chemisch, z.B. als Blöcke, in das PA eingebaut werden können.

Entsprechende Weichsegmente sowie Verfahren, sie in das PA einzubauen, z.B. über Kopplung an den Aktivator, sind in großer Zahl bekannt.

Beispielsweise können aminierte Weichsegmente, z.B. Polyether, mit Polyisocyanaten zu Isocyanatterminierten Weichsegmenten umgesetzt werden, welche dann einen poly meren Aktivator darstellen, oder es können OH-terminierte Polyether mit Dicarbonsäuredichloriden, z.B. Terephthalsäuredichlorid, zu Säurechlorid-terminierten Polyethern und anschließend mit einem Lactam zu einem polymeren Aktivator umgesetzt werden.

Bei Anwesenheit von Elastomeren kann, je nach Menge derselben, die zur Erzielung einer ausreichenden Viskosität notwendige Menge an Verdickerpolymeren unter Umständen auch geringer als 2 %, z.B. 1,5 %, sein. Solche elastomerhaltige Lactamschmelzen sind auch Gegenstand der Erfindung.

Je nach Art des Elastomersegments bzw. der Endgruppen bzw. der Art der Verknüpfung mit dem Aktivator kann die Wahl des Katalysators eingeschränkt sein, z.B. dann, wenn der Katalysator das Elastomersegment abbaut. Entsprechende optimale Kombinationen sind bevorzugt erfindungsgemäß einzusetzen.

Prinzipiell sind als Verdicker für Lactamschmelzen alle in dem jeweiligen Lactam bei ca. 140 °C gut löslichen Polymere geeignet; die Wahl wird jedoch drastisch eingeschränkt, da die aktivierte anionische Polymerisation von Lactamen ein chemisch sehr empfindliches System darstellt, welches mit einer Vielzahl von Strukturen, insbesondere H-aciden Verbindungen, reagieren kann, was sich dann durch Polymerisationsstörungen bemerkbar macht. Die überraschende Erkenntnis war, daß die erfindungsgemäß einzusetzenden Verdickerpolymeren im allgemeinen, wenn überhaupt, nur relativ geringe Polymeri sationsstörungen bewirken (das Ausmaß von Polymerisationsstörungen kann von dem jeweils verwendeten Katalysator/Aktivatorsystem abhängen), eine gute Viskositätsergiebigkeit und eine sehr gute Löslichkeit zeigen. Die erfindungsgemäß einzusetzenden Verdickerpolymeren stellen also ein besonders geeignetes Verdickersystem dar.

Es ist bekannt, daß z.B. Polyvinylpyrrolidon als Verdicker für Wasser bzw. Formulierungen auf Basis Wasser benutzt werden kann. Daraus kann aber die erfindungsgemäße Viskositätserhöhung von (wasserfreien) Lactamschmelzen bei erhöhter Temperatur nicht abgeleitet werden, da es sich bei dem einen (Wasser) um ein hochpolares, protisches, anorganisches Medium und bei den anderen (Lactamen) um wesentlich weniger polare, aprotische, organische Medien handelt. Weiterhin war überraschend, daß trotz ihrer großen Hydrophilie (und im Fall von Polyvinylpyrrolidon trotz ihrer Basenempfindlichkeit) die anionische Polymerisation der Lactame durch die Verdickerpolymeren nicht oder nicht wesentlich gestört wird. Insgesamt muß damit die vorliegende Erfindung als unerwartet und nicht naheliegend gewertet werden.

Als Füll- bzw. Verstärkungsstoffe (bis 60, bevorzugt 5-40 Gew.-%) sind prinzipiell die üblicherweise eingesetzten geeignet, wobei, je nach Zusammensetzung der Schlichte, nicht alle gleich gut geeignet sein können. Beispiele für erfindungsgemäß einsetzbare Füll-/Verstärkungsstoffe zur Herstellung der verstärkten/gefüllten (Guß)polyamid(teile) sind Glasfasern, Glas kugeln, mineralische Füllstoffe, Kohlenstoff-Fasern und andere mehr, wie sie in vielfacher Weise im Stand der Technik bekannt sind; vielfach tragen sie bestimmte Schlichten oder sind entsprechend vorbehandelt, z.B. silanisiert.

Es können weiterhin alle üblichen Additive wie z.B. Entformungsmittel, UV-Stabilisatoren, Antioxidantien, Schmiermittel wie z.B. $MoS_2$ und andere, gegebenenfalls chemisch angekoppelte Legierungspartner, und andere Legierungspartner (Elastomer-Schlagzäh-Modifikatoren), wie sie im Stand der Technik beschrieben sind, anwesend sein.

Die Herstellung der erfindungsgemäßen verstärkten und/oder gefüllten Polyamid, bevorzugt Gußpolyamidteile, erfolgt prinzipiell nach den üblichen Verfahren.

Die erfindungsgemäßen Lactamschmelzen finden ihre Verwendung vorzugsweise zur Herstellung von Gußpolyamid-Teilen (Fertigteile, (verstärkte) Halbzeuge, Verbundwerkstoffe und andere mehr), wobei sie für verstärkte bzw. gefüllte Typen besonders geeignet sind. Es können drucklose oder Druckverfahren (z.B. Reaktionsspritztechnik) eingesetzt werden, offene oder geschlossene Form verwendet werden und übliche, bekannte Formtemperaturen, Heizdauer, Gießzeiten, Entformungs-/Entschäumer-Substanzen (mit)verwendet werden.

Die erfindungsgemäß einzusetzenden Verdickerpolymere weisen eine sehr gute Löslichkeit in den Lactamen (niedrige Rekristallisationstemperatur des Polymeren, niedrige Aufschmelztemperatur der Lactammischung) sowie eine gute Verdickerwirkung auf. Sie sind daher besonders geeignete Verdicker.

Die nachfolgenden Beispiele mit typischen Einsatzstoffen in typischen Mengen dienen zur Erläuterung der Erfindung, ohne sie darauf einzuschränken.

Die Messung der Viskositäten erfolgte mit einem Brookfield-Viskosimeter.

## Beispiele

### Beispiele 1 bis 9

Caprolactam und verschiedene Mengen an Poly-(2-ethyl-oxazolin) (PEOX 500; ein Produkt der Dow Chemical Corp.) wurden bei 140 °C aufgeschmolzen und durch Rühren homogenisiert.

Die Lösezeiten sowie die Viskositäten der Lactamschmelzen sind in Tabelle 1 zusammengestellt.

### Beispiele 10 bis 12

In derselben Weise wurden die Viskositäten einer 10 %igen Lösung eines niedermolekularen Poly-(2-ethyloxazolins) (PEOX 200; ein Produkt der Dow Chemical Corp.) in Caprolactam bestimmt (Tabelle 1).

Tabelle 1

| Bsp. | CL (g) | Verdicker (g) | (%)** | Lösezeit (min) | $\eta$* [mPa.s] | bei T (°C) |
|---|---|---|---|---|---|---|
| 1 | 185 | 15 | 7,5 | 35 | 60 | 135 |
| 2 | 185 | 15 | 7,5 | 35 | 90 | 120 |
| 3 | 185 | 15 | 7,5 | 35 | 120 | 111 |
| 4 | 180 | 20 | 10,0 | 50 | 120 | 135 |
| 5 | 180 | 20 | 10,0 | 50 | 150 | 120 |
| 6 | 180 | 20 | 10,0 | 50 | 180 | 110 |
| 7 | 170 | 30 | 15,0 | 50 | 300 | 135 |
| 8 | 170 | 30 | 15,0 | 50 | 420 | 120 |
| 9 | 170 | 30 | 15,0 | 50 | 480 | 110 |
| 10 | 180 | 20 | 10,0 | 50 | 60 | 135 |
| 11 | 180 | 20 | 10,0 | 50 | 90 | 120 |
| 12 | 180 | 20 | 10,0 | 50 | 120 | 110 |

*) Viskosität der Lactamschmelze
**) bezogen auf das Gemisch

Die Rekristallisationstemperatur des Verdickers aus der Schmelze beim Abkühlen lag bei 80 bis 85 °C, die Aufschmelztemperatur (klare Schmelze) der verdickten Lactamschmelze bei 90 bis 100 °C.

Beispiel 13

87,2 g Caprolactam und 10 g des in den Beispielen 1 bis 9 benutzten Poly-(2-ethyl-oxazolins) wurden unter $N_2$ bei 140 °C aufgeschmolzen und innerhalb von 30 min unter Rühren homogenisiert. Zu der klaren Schmelze wurden 4 g einer 20 %igen Lösung von Natriumcaprolactamat in Caprolactam und 1,2 g einer 70 %igen Lösung eines oligomeren, aliphatischen Polyisocyanats in Dimethylformamid gegeben.

Die Polymerisation setzte nach einer Minute ein und lieferte einen vernetzten Gußpolyamid-Block.

Beispiele 14 bis 28

In der für die Beispiele 1 bis 9 beschriebenen Weise wurde Caprolactam mit unterschiedlichen Mengen an Poly-N-vinylpyrrolidon ($\overline{M}n$ = 360 000 $gmol^{-1}$) bei 140 bis 150 °C angedickt. Die Lösezeiten und -temperaturen sowie Viskositäten bei unterschiedlichen Temperaturen sind in Tabelle 2 zusammengestellt.

Beispiel 29

91,2 g Caprolactam und 6 g Polyvinylpyrrolidon ($\overline{M}n$ = 360 000 $gmol^{-1}$) wurden bei 140 °C homogenisiert, dann insgesamt 4 g Katalysator (siehe Beispiel 13) und 1,6 g Aktivator (siehe Beispiel 13) zugegeben und polymerisiert. Es resultierte ein vernetzter Gußpolyamidblock; die Polymerisation setzte nach 10 Sekunden ein.

Tabelle 2

| Bsp. | CL (g) | PVP[1] | | Lösezeit (min) | $\eta$[2] [mPa.s] | bei T (°C) |
|---|---|---|---|---|---|---|
| | | (g) | (%)[3] | | | |
| 14 | 90 | 10 | 11,1 | 60 | 510 | 135 |
| 15 | 90 | 10 | 11,1 | 60 | 720 | 120 |
| 16 | 90 | 10 | 11,1 | 60 | 840 | 110 |
| 17 | 91,5 | 8,5 | 9,3 | 30 | 240 | 135 |
| 18 | 91,5 | 8,5 | 9,3 | 30 | 330 | 120 |
| 19 | 91,5 | 8,5 | 9,3 | 30 | 420 | 110 |
| 20 | 92,5 | 7,5 | 8,1 | 20 | 180 | 135 |
| 21 | 92,5 | 7,5 | 8,1 | 20 | 240 | 120 |
| 22 | 92,5 | 7,5 | 8,1 | 20 | 300 | 110 |
| 23 | 94 | 6 | 6,4 | 15 | 120 | 135 |
| 24 | 94 | 6 | 6,4 | 15 | 150 | 120 |
| 25 | 94 | 6 | 6,4 | 15 | 180 | 110 |
| 26 | 95 | 5 | 5,3 | 15 | 90 | 135 |
| 27 | 95 | 5 | 5,3 | 15 | 90-120 | 120 |
| 28 | 95 | 5 | 5,3 | 15 | 120 | 110 |

1) PVP K 90 (je höher der K-Wert ist, desto höher ist das Molekulargewicht)
2) Viskosität der Schmelze
3) bezogen auf Lactam

Beispiele 30 bis 32

30 g Caprolactam und 44,2 g einer ca. 23 %igen Lösung von Poly-4-vinylpyridin ($\overline{M}n$ = 200 000) in Methanol wurden bei 100° C und einem Vakuum von ca. 15 Torr gerührt, bis das Lösungsmittel abgezogen war.

Die Viskositäten betrugen 150 mPa.s bei 135° C, 180 mPa.s bei 120 bis 210 mPa.s bei 110° C.

Die Rekristallisationstemperatur des Verdickers aus der Schmelze beim Abkühlen lag bei ca. 80° C, die Aufschmelztemperatur (klare Schmelze) der verdickten Lactamschmelze ebenfalls bei ca. 80° C.

Beispiel 33 und 34

In der für die Beispiele 14-28 beschriebenen Weise wurden verdickte Lactamlösungen aus Caprolactam und Polyvinylpyrrolidon K 120 (ein Produkt der GAF Chemicals Corporation) hergestellt. Die Lösezeit bei 5 % PVP-Einsatz betrug 30 min/140° C. Die Viskositätswerte lagen bei 420 mPas (135° C), 540 mPas (120° C) und 720 mPas (110° C). Nach der Viskositätsmessung wurde mit Caprolactam auf 4 % PVP-Gehalt verdünnt; die Viskositätswerte betrugen 180 mPas (135° C), 240 mPas (120° C) und 330 mPas (110° C).

**Ansprüche**

1. Lactamschmelzen mit erhöhter Viskosität auf Basis von Lactamen mit mindestens 4 C-Atomen im Ring, dadurch gekennzeichnet, daß sie 2-20 Gew.-% (bezogen auf die verdickte Lactamschmelze), bevorzugt 3-18 Gew.-% und besonders bevorzugt 5-15 Gew.-% an wasser- und/oder alkohollöslichen Polymeren mit Amid-und/oder Amin- und/oder Ethergruppen, wobei die funktionellen Gruppen keine aciden H-Atome mehr tragen sollen, enthalten, bevorzugt Poly(2-alkyloxazoline), Poly-N-vinyllactame, Polyvinylpyridine und Poly-N-alkyl-N-vinylamide, wobei die Viskositäten der resultierenden Lactamschmelzen zwischen 20 und 2000 mPa.s bei 135° C liegen.

2. Lactamschmelzen nach Anspruch 1, dadurch gekennzeichnet, daß bevorzugt als Verdicker eingesetzt werden:

A. Polyalkyloxazolin-Homo- und -Copolymere auf Basis des Bausteins (I),

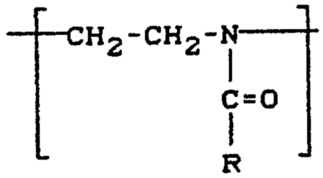

(I)

wobei
R einen (ar)aliphatischen Rest mit 1-30, bevorzugt 1-5, C-Atomen oder einen (Alk)arylrest mit 6-20 C-Atomen,
bedeuten, wobei die Homopolymeren des Bausteins (I) besonders bevorzugt sind,
B. Poly-N-vinyllactam-Homo- und -Copolymere auf Basis des Bausteins (II)

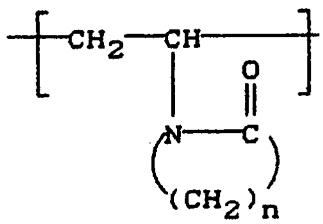

(II)

wobei
n eine ganze Zahl von 2-15, bevorzugt 3-6 und 10-12, ist, und wobei die Homopolymeren besonders bevorzugt sind,
C. Polyvinylpyridin-Homo- und -Copolymere auf Basis des Bausteins (III)

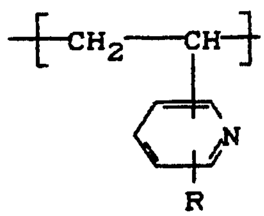

(III)

wobei R einen $C_{1-8}$-Kohlenstoffrest oder (besonders bevorzugt) Wasserstoff bedeuten, und die Homopolymeren des Bausteins (III) besonders bevorzugt sind,
und
D. Poly-N-vinyl-N-alkylamid-Homo- und -Copolymere auf Basis des Bausteins (IV)

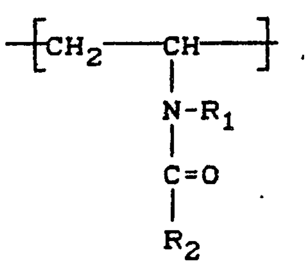

(IV)

wobei
$R_1$, $R_2$ unabhängig voneinander einen $C_{1-10}$-Kohlenstoffrest bedeuten, bevorzugt einen $C_{1-5}$-Rest, und wobei wiederum die Homopolymeren besonders bevorzugt sind und

daß besonders bevorzugt u.a. eingesetzt werden:

Poly-(2-ethyloxazolin)

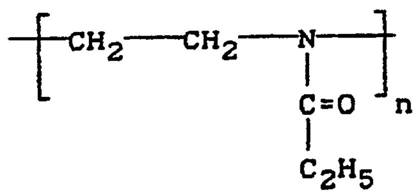

(V)

Poly-N-vinylpyrrolidon

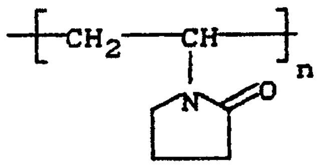

(VI)

Poly-N-vinylcaprolactam

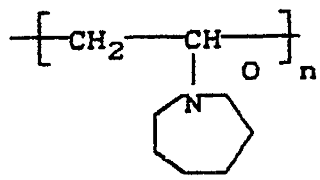

(VII)

Poly-2-vinylpyridin

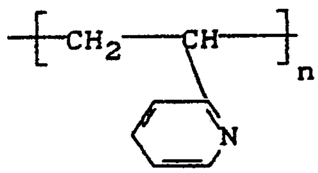

(VIII)

Poly-4-vinylpyridin

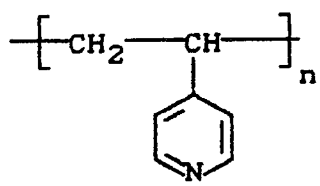

(IX)

Poly-N-vinyl-N-methylacetamid

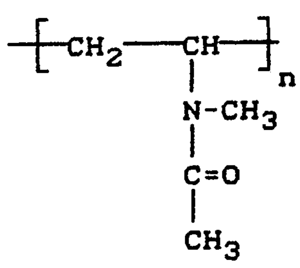

(X)

wobei die Molekulargewichte ($\overline{M}w$) der Verdicker mindestens 10 000, bevorzugt mindestens 50 000 und besonders bevorzugt mindestens 100 000 g $mol^{-1}$ betragen sollen, wobei die $\overline{M}n$-Werte der Polymeren (VI) ganz besonders bevorzugt mindestens 300.000 g $mol^{-1}$ betragen sollen.

3. Lactamschmelzen nach Anspruch 1, dadurch gekennzeichnet, daß die Verdickerpolymeren zu 2 bis 20 Gew.-%, bevorzugt 3 bis 18 Gew.-% und besonders bevorzugt 4 bis 15 Gew.-% eingesetzt werden, wobei

die Viskositätswerte der resultierenden Lactam schmelzen bei 135 °C bevorzugt mindestens 50 mPa.s und besonders bevorzugt mindestens 100 mPa.s, betragen.

4. Lactamschmelzen nach Anspruch 1, dadurch gekennzeichnet, daß als Lactam besonders bevorzugt ε-Caprolactam, gegebenenfalls in Kombination mit anderen ω-Lactamen (bevorzugt ω-Laurinlactam), eingesetzt wird.

5. Lactamschmelzen nach Anspruch 1, dadurch gekennzeichnet, daß (gegebenenfalls einbaubare) Weichsegmente bzw. Elastomere anwesend sind.

6. Lactamschmelzen nach Anspruch 1, dadurch gekennzeichnet, daß sie Füll- und/oder Verstärkungsstoffe in einer Menge bis 60, bevorzugt 5-40 Gew.-%, enthalten und, daß als Füll- bzw. Verstärkungsstoffe die bekannten Füllstoffe/Verstärkungsstoffe wie z.B. mineralische Füllstoffe, Glaskugeln, Glasfasern, Kohlenstoffasern und andere mehr eingesetzt werden.

7. Verwendung der Lactamschmelzen nach Ansprüchen 1-6 zur Herstellung von Polyamiden, insbesondere durch aktivierte anionische Polymerisation (Gußpolyamid), unter Verwendung üblicher Katalysatoren (bevorzugt Metallcaprolactamate wie z.Bsp. Natriumcaprolactamat) und Aktivatoren (bevorzugt (gegebenenfalls blockierte) (Poly)isocyanate wie z.B. Hexamethylendiisocyanat bzw. trimerisierte oder polymere Abkömmlinge desselben, und Acyllactame) sowie gegebenenfalls unter Zusatz üblicher Zusatzstoffe, bevorzugt unterhalb des Schmelzpunktes des jeweils entstehenden Polyamids.

8. (Guß)polyamid-(Artikel), hergestellt aus Lactamschmelzen nach Ansprüchen 1-6 unter Verwendung üblicher Katalysatoren (bevorzugt Metallcaprolactamate wie z.Bsp. Natriumcaprolactamat) und Aktivatoren (bevorzugt (gegebenenfalls blockierte) (Poly)isocyanate wie z.B. Hexamethylendiisocyanat bzw. trimerisierte oder polymere Abkömmlinge desselben, und Acyllactame) sowie gegebenenfalls weiterer üblicher Zusatzstoffe.

9. Verfahren zur Herstellung der (Guß)polyamid-(Artikel) unter Verwendung der Lactamschmelzen nach Ansprüchen 1 - 6, dadurch gekennzeichnet, daß die Lactamschmelzen bei Anwesenheit üblicher Katalysatoren und Aktivatoren, bevorzugt unterhalb des Schmelzpunkts des jeweils entstehenden Polyamids, polymerisiert werden.